# EUROPEAN PATENT SPECIFICATION

(11) **EP 3 735 862 B1**
(45) Date of publication and mention of the grant of the patent: **07.06.2023**
(21) Application number: 20171461.5
(22) Date of filing: 27.04.2020
(51) Int. Cl.: A47B 91/02, F16B 12/20, F16B 12/46

(54) **IMPROVED JOINING AND LEVELLING SYSTEM FOR PARTS OF FURNITURE**
VERBESSERTES VERBINDUNGS- UND NIVELLIERUNGSSYSTEM FÜR MÖBELTEILE
SYSTEME AMELIORE DE CONNECTION ET DE MISE A NIVEAU POUR ELEMENTS DE MEUBLE

(30) Priority: 07.05.2019 IT 201900006583
(43) Date of publication of application: 11.11.2020
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Franco Martegani S.r.l.

(56) References cited:
- WO-A1-2017/060255
- WO-A1-2019/049003
- AU-A1- 2009 227 484
- DE-U- 7 435 483
- IT-A1- UA20 161 574

## Description

The present invention relates to furniture and furnishing items comprising an improved joining and levelling system for parts of furniture and furnishing itemsAs is well-known to persons skilled in the art, the current joining and levelling systems for furniture mainly aim at solving the following two technical problems.

A first problem is to eliminate the presence (in the horizontal and vertical panels) inside the furniture, of unsightly and anti-functional access holes to the two pairs of front and rear joining and levelling units, through which (i.e. the access holes), actuation/maneuvering tools such as screwdrivers and the like must pass.

Vertical panels refer to panels perpendicular to a floor or supporting surface of the furniture, whereas horizontal panels refer to panels parallel to said floor (such as a base) and perpendicular to said vertical panels.

A second problem is to be able to actuate both pairs of joining and levelling units, front and rear, with front access and in a very small space existing between the base of a piece of furniture (last lower horizontal panel) and the floor on which the furniture rests.

Systems of this type are described for example in patents PCT/EP2017/066275, PCT/EP2017/066496, PCT/EP2017/075675.

A further current requirement of the above-mentioned systems - there always being a total lack of holes inside the furniture - is to be able to actuate the front and rear joining units, and the front and rear levelling units even when the space between the horizontal base panel of the furniture (bottom panel) and the floor is practically non-existent, i.e. reduced to only a few millimeters. There is furniture which, before levelling, can rest directly with the base on the floor.

The general objective of the present invention is therefore to satisfy the above-mentioned further current requirement and, in view of this objective, a joining and levelling system for parts of furniture and furnishing items in general has been conceived, such as at least one assembly consisting of at least one vertical panel perpendicular to a floor P and at least one horizontal panel or base with a visible front edge, parallel to said floor P, wherein a first pair of joining units, front and rear respectively, and a second pair of levelling units, front and rear respectively, are applied to said vertical and horizontal panels or base, said two pairs of joining and levelling units being operable from the front, characterized in that a plurality of longitudinal pass-through holes is formed through said horizontal panel or base for access to said two pairs of joining and levelling units; actuation and manoeuvring tools of said two pairs of units which are incorporated within the thickness of said base which substantially contains its overall height, being able to pass through said holes to which access is obtained on said visible front edge of said horizontal panel or base.

More specifically, the invention relates to a furnishing item comprising at least one assembly consisting of a vertical panel perpendicular to a floor and a horizontal panel or base with a visible front edge, parallel to said floor, the furnishing item further comprising joining and levelling system having the characteristics specified in the enclosed claim 1 and subordinate claims.

The structural and functional characteristics of the present invention and its advantages with respect to the known art can be clearly understood from the following description, referring to the attached schematic drawings, which illustrate three non-limiting embodiment examples of the invention itself. In the drawings:
- figures 1 and 2 are schematic perspective views illustrating, from below, a first example of a joining and levelling system according to the invention applied to a furniture assembly consisting of a vertical panel (for example a shoulder) and a horizontal panel which serves as the base of the furniture;
- figure 3 is a raised schematic front view of the assembly of figures 1 and 2 according to the arrow F of figure 4;
- figure 4 is a schematic plan view of the assembly of figures 1 and 2;
- figure 5 is an enlarged sectional view taken according to the line V-V of figure 4;
- figure 6 is an enlarged sectional view taken along the line VI-VI of Figure 4;
- figures 7 to 12 are views similar to figures 1 to 6 illustrating a second possible embodiment of the invention;
- figure 13 is an exploded perspective view illustrating a third possible embodiment of the system according to the invention;
- figure 14 is an exploded perspective view illustrating a detail of figure 13, i.e. the module comprising the two pairs of joining and levelling units;
- figure 15 is a sectional plan view showing the front and rear joining units;
- figure 16 is a schematic plan view illustrating the system of figures 13-15;
- figure 17 is a vertical section taken along the line XVII-XVII of figure 16;
- figures 18 and 19 are two details in vertical section illustrating the two pairs of joining and levelling units, front and rear respectively.

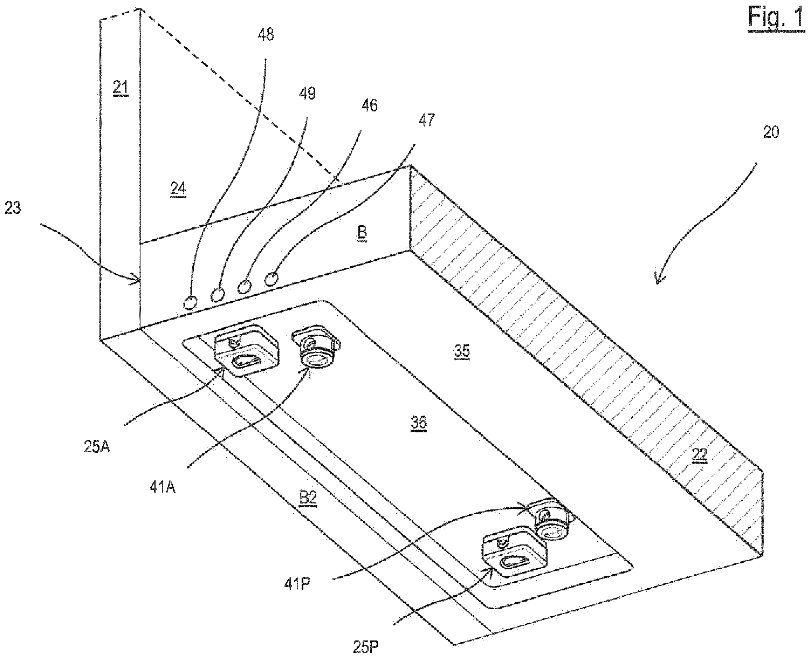

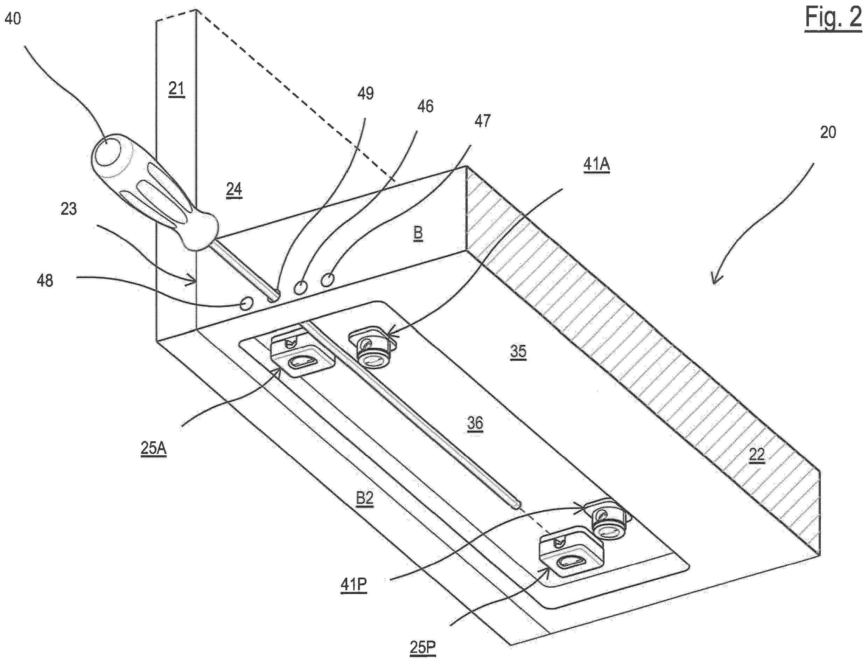

With reference to figures 1-6 of the drawings, 20 indicates as a whole an assembly of furniture or parts of furniture in general structurally composed of a vertical panel 21 (for example a shoulder of a piece of furniture) and a horizontal panel 22, or base, which is the lower horizontal panel of the furniture itself adjacent and parallel to a floor P, or other supporting surface on which said furniture rests.

The invention is illustrated and described, for the sake of simplicity, with respect to an essential furniture assembly, consisting of a single vertical panel and a single horizontal panel, as in most cases, however, the furniture assembly, or piece of furniture, is naturally composed of various vertical panels interconnected by horizontal panels.

As can be clearly seen from the drawings, the panels 21, 22 are perpendicular to each other and are stably joined together with the longitudinal edge 23 of the horizontal panel or base 22 which is abutted against the internal surface 24 of the vertical panel 21, which is perpendicular to the floor P.

The stable joining or connection between said panels 21, 22 is obtained by means of a pair of joining units 25A and 25P, front and rear respectively: i.e. the front unit 25A is close to the front part of the furniture (visible edge B), whereas the rear unit 25P is close to the rear part of the furniture itself.

Each of the joining units 25A and 25P can, for example, be of the type described and illustrated in patent PCT/EP2017/ 066275.

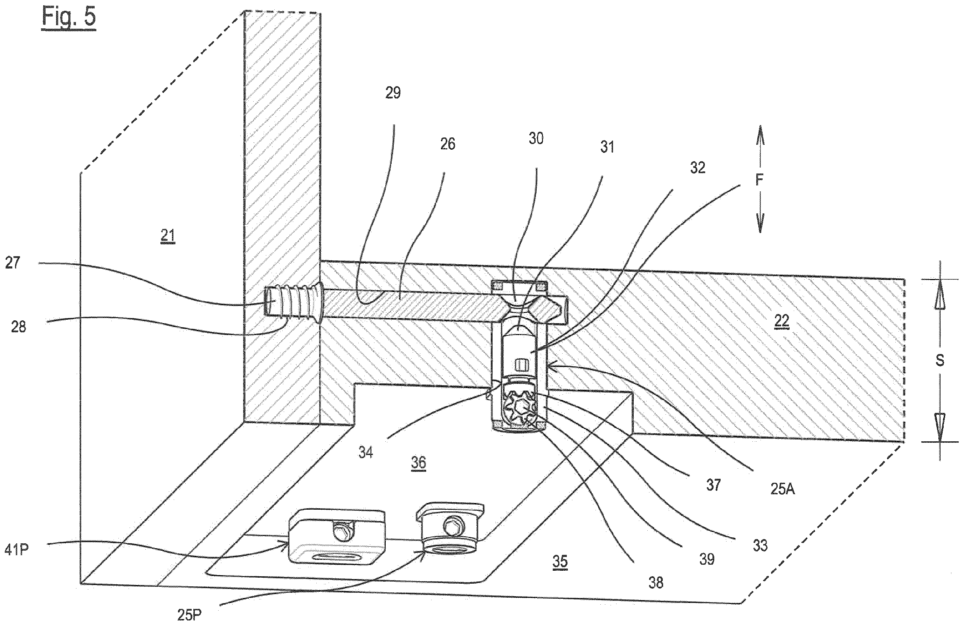

With reference to figure 5 of the drawings, briefly, each joining unit 25A and 25P is composed of a plug or pin 26 which extends from the vertical panel 21, perpendicular to the same. The plug 26 is fixed to the panel 21 by means of a shank 27 which is screwed or forced into a complementary seat 28 of the panel 21 itself.

Said plug 26 is inserted inside a corresponding seat 29 of the horizontal panel or base 22 and, at the end opposite to the shank 27, has an annular groove 30. As can be clearly seen from figure 5 of the drawings, said groove 30 has a truncated-conical, or flared, section in whose interior the tip 31, having a corresponding truncated-conical section, of an actuation screw 32 acts, which can be moved backwards and forwards in the direction of the arrow F. In this way, the panels 21, 22 are reciprocally moved together and firmly interconnected.

The screw 32 is perpendicular to the plug. Said screw 32 is driven to translate inside a body 33 which is inserted in a corresponding seat 34 of the panel or base 22 with access from the lower surface 35, which has a single large recess or seat 36.

Said surface 35 is coplanar with the lower edge B2 of the vertical panel 21.

The translation of the screw 32 is controlled by a known screw-and-nut mechanism comprising a head with a toothed crown 37 provided at the end opposite to the tip 31, a pinion 38 with a perpendicular rotation axis (at 90°) with respect to the translation axis of the screw 32, being engaged with said head 37. The screw 32 can translate, whereas the head 37 and the pinion 38 can only rotate reciprocally engaged.

Said pinion 38 also has an indentation 39 in which a maneuvering tool 40 is engaged, which controls its rotation, as described in greater detail hereunder-, with access from the front side of the furniture (edge B).

According to the present invention, as can be clearly seen from the drawings, the overall height of said joining units 25A and 25P is contained within the thickness S of the panel or base 22.

Furthermore, the indentations 39 of the pinions 38 of the joining units 25A and 25P lie on the same horizontal plane A-A coinciding with the horizontal plane on which the base 22 lies.

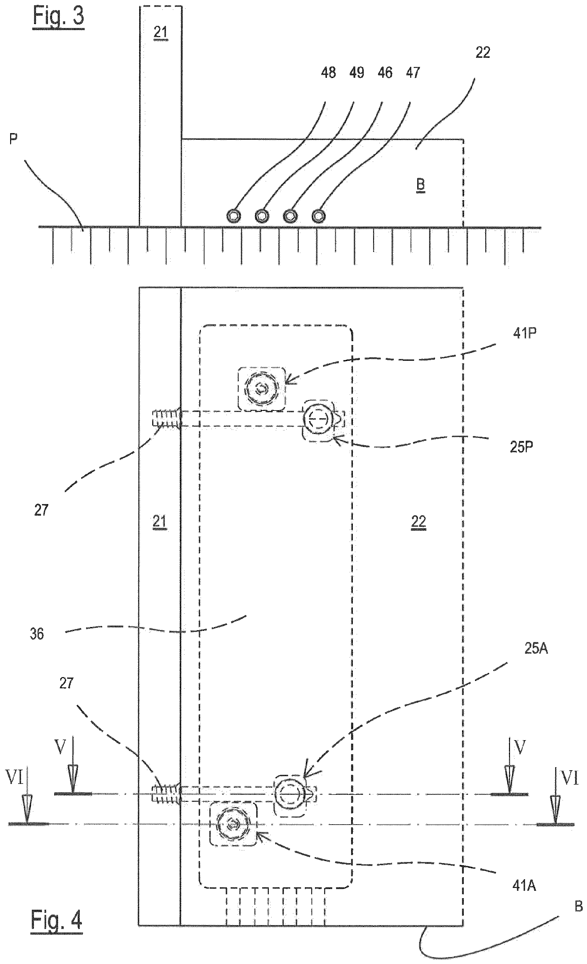

The furniture assembly 20 is also provided with a pair of levelling units 41A and 41P, front and rear respectively, positioned close, adjacent, to the above-mentioned joining units 25A and 25P (figure 4).

Each of said levelling units 41A and 41P can, for example, be of the type described and illustrated in patent PCT/EP2017/075675, to which reference should be made for further clarifications if necessary.

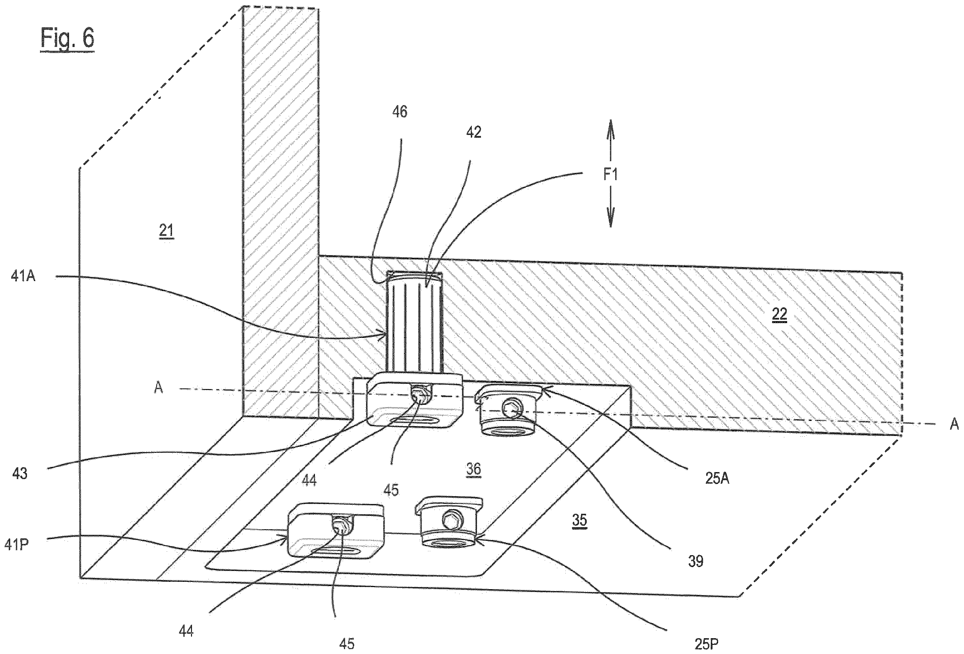

As can be clearly seen from figure 6 of the drawings, said levelling units 41A, 41P each consist of a telescopic column 42 with a supporting base 43 with a front opening 44, for access to an indentation 45 of a maneuvering/actuation pinion of a screw/nut mechanism (known *per se* and not shown), which controls the vertical translation in the direction of the arrow F1 of the telescopic column 42, and therefore of the leveller.

Said telescopic column 42 is completely housed within a seat 46 of the lower horizontal panel, or base, 22, whereas the base 43 is housed inside the seat 36.

In this way, each levelling unit 41A/41P (i.e. its overall height) is completely contained in the thickness S of the base 22, when at rest, i.e. in a non-operating condition.

As can be clearly seen from the drawings, the indentations 39 of the joining units 25A, 25P are aligned with each other, as also the indentations 45 of the levelling units 41A, 41P.

All of the indentations 39 and 45 lie on the same plane A-A parallel to the lower external surface 35 of the base 22.

According to the present invention, said indentations 39 and 45 of the units 25A, 25P and 41A, 41P are accessible through a plurality of longitudinal pass-through holes, more specifically through two pairs of pass-through holes 46, 47 and 48, 49, formed through the base 22. Said longitudinal holes 46, 47, 48, 49 are parallel to each other and to the edge B2 of the vertical panel 21.

Said two pairs of pass-through holes 46, 47 and 48, 49 each have an inlet on the visible front edge B of the base 22 and an outlet which opens into the seat 36. The pairs of holes 46, 47 and 48, 49 lie on the same plane A-A on which the indentations 39 and 45 of the joining units 25A, 25P and levelling units 41A, 41P, lie.

The pairs of pass-through holes 46, 47 are aligned with the indentations 39 of the joining units 25A, 25P, whereas the pairs of pass-through holes 48, 49 are aligned with the indentations 45 of the levelling units 41A, 41P.

It is therefore evident that said holes 46.47.48.49 act as a passage and guide for the tool 40.

In this way, both the joining units 25A, 25P and the levelling units 41A, 41P can be actuated/maneuvered using the maneuvering tool 40, also with a piece of furniture whose base or horizontal panel rests directly on the floor P.

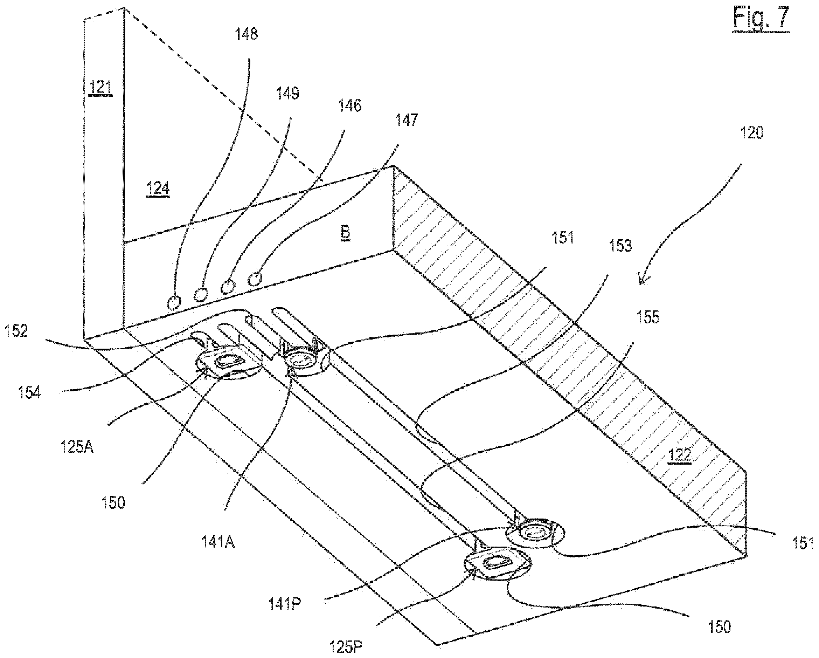

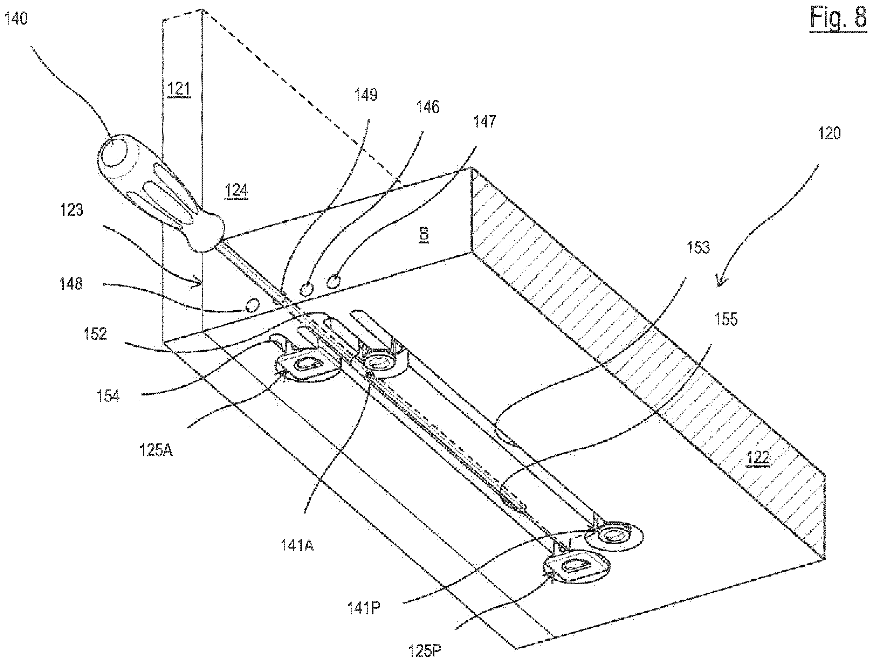

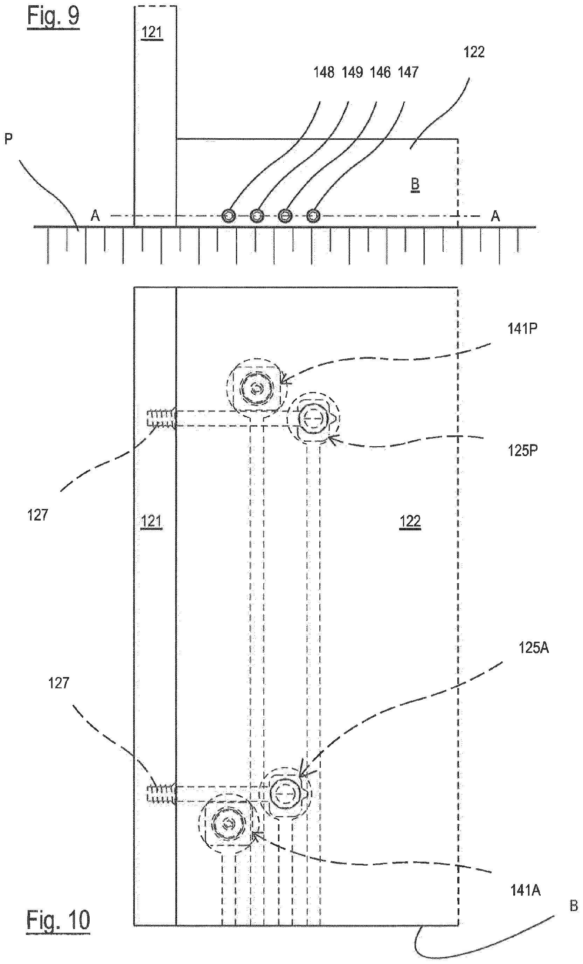

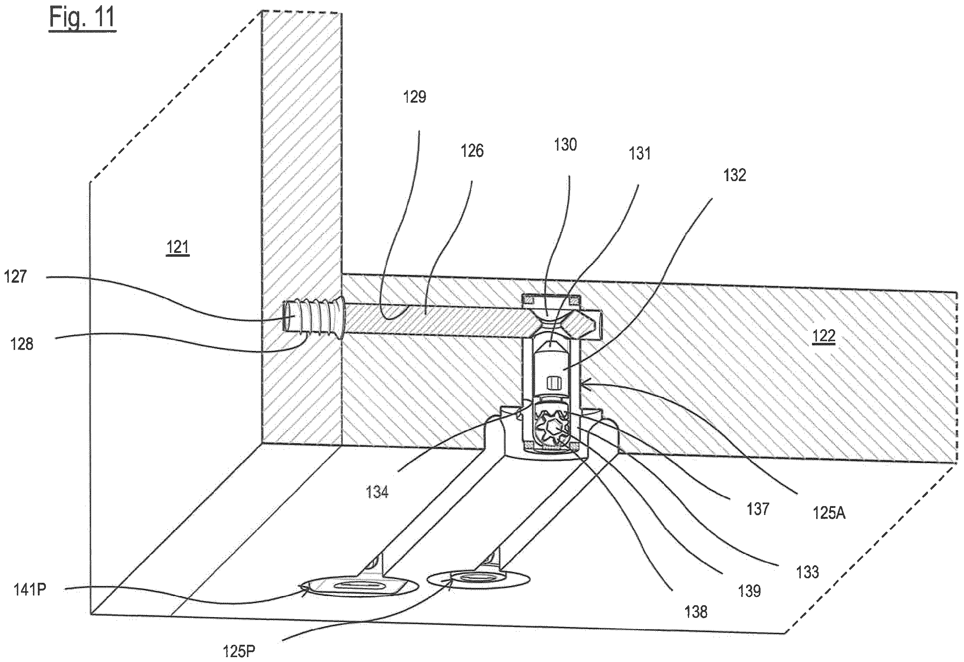

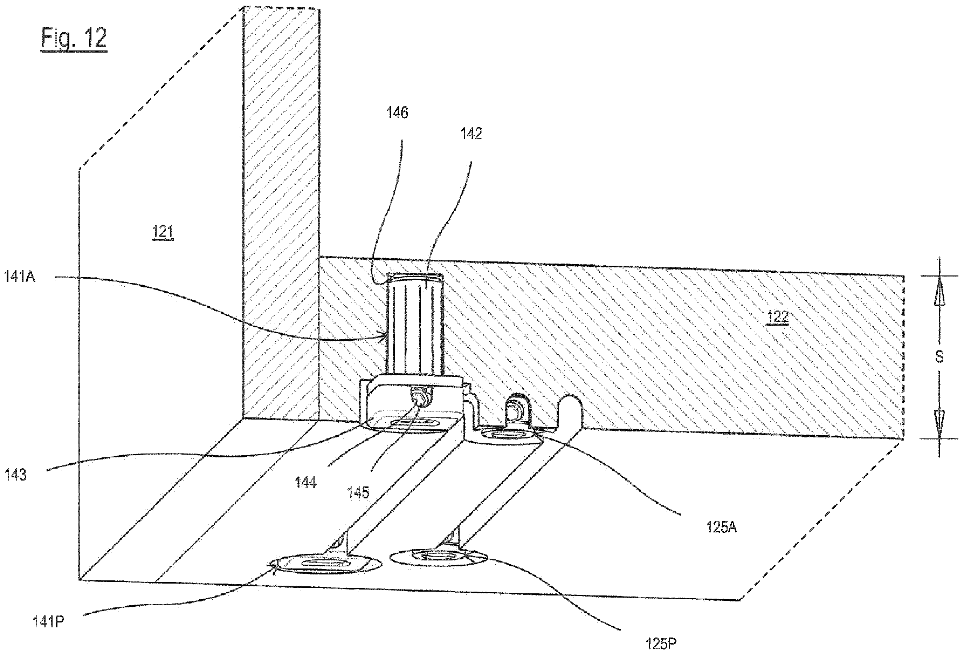

Figures 7-12 illustrate a second possible embodiment of the invention wherein the same or equivalent components as those illustrated in figures 1-6 are indicated with the same numerical references increased by 100.

The embodiment of the invention illustrated in figures 7-12 is substantially equivalent to that illustrated and described with reference to figures 1-6. Instead of the single large recess 36 which houses in its interior all the joining units 25A, 25P and levelling units 41A, 41P, each unit 125A, 125P and 141A, 141P is housed within its own specific seat.

More specifically, with reference to figures 7, 8, 11, 12, it can be clearly seen that each joining unit 125A, 125P is housed within its own specific complementary seat 150.

Likewise, each levelling unit 141A, 141P is housed within its own specific seat 151.

Consequently, the pairs of pass-through holes 146, 147 and 148, 149 open into respective pairs of slots 152, 153 and 154, 155 having the obvious function of guiding the maneuvering/actuation tool of the joining units 125A, 125P and levelling units 141A, 141P.

The slots 152,153 and 154,155 are formed in the thickness of the base 122 and extend, parallel to each other, from the outlet of the pass-through holes 146, 147 and 148, 149 to the inlet of the indentations 139 and 145 of the maneuvering mechanisms, of the joining units 125A, 125P and levelling units 141A, 141P, respectively.

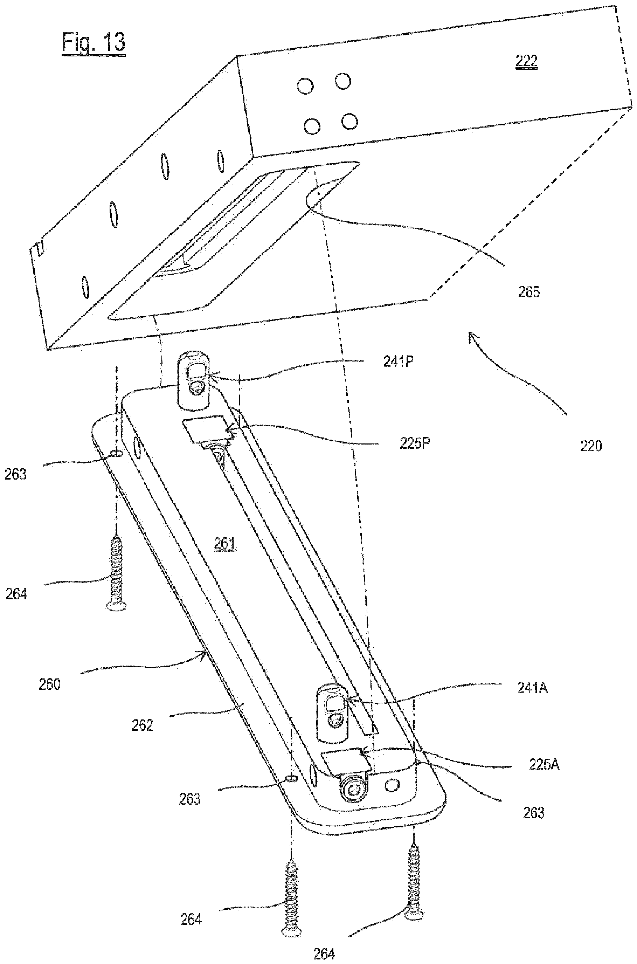

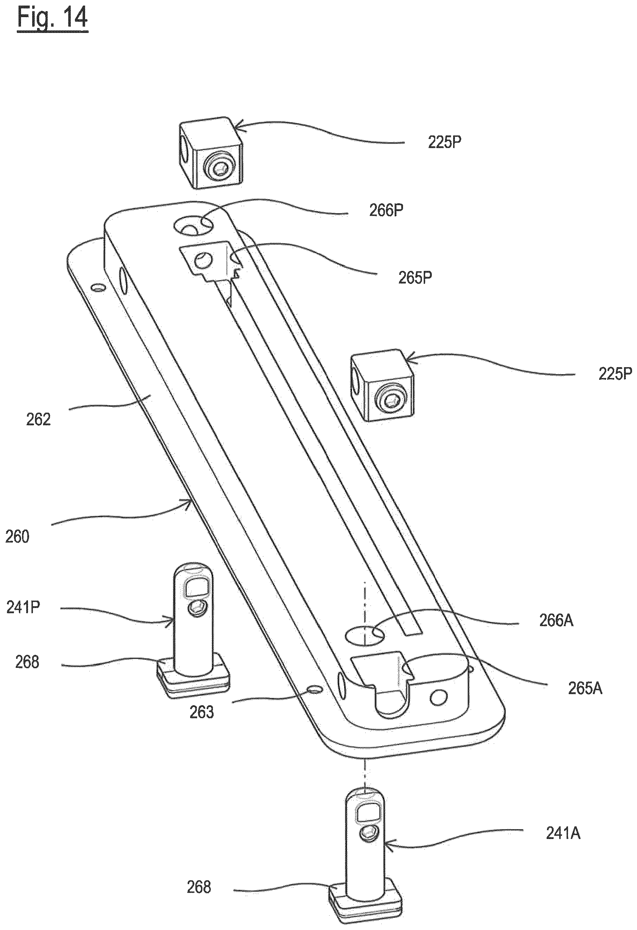

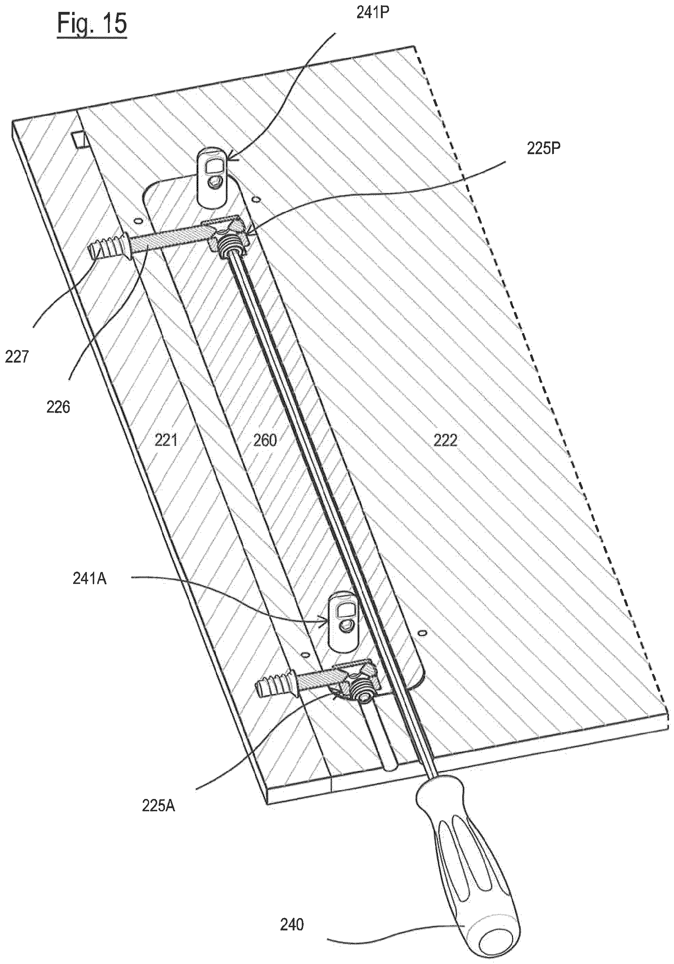

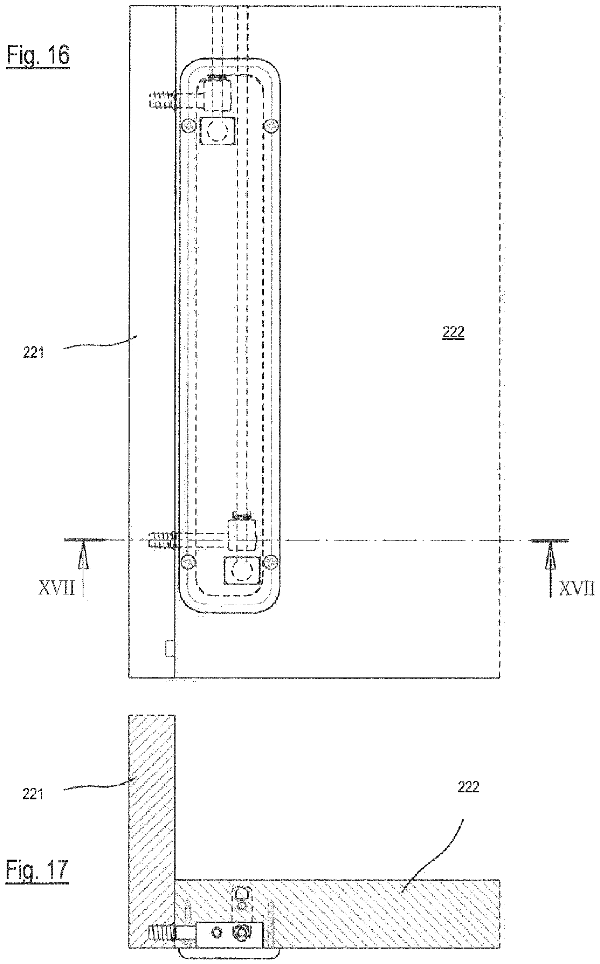

Figures 13-19 illustrate a third possible embodiment of the invention wherein the same or equivalent components as those illustrated in figures 1-6 are indicated with the same numerical references increased by 200.

According to this third embodiment of the invention, the system in question provides a joining and levelling module 260 comprising both pairs of joining units 225A, 225P and levelling 241A, 241P, front and rear respectively.

Said module 260 typically consists of a support-container 261 on which the above-mentioned units 225A, 241A and 225P and 241P are assembled.

As can be clearly seen from the drawings, said support-container 261 has a substantially elongated flattened parallelepiped configuration, similar to a "power strip", with rounded edges. The container-holder 261 also has a perimetric flange 262 with holes 263 for the passage of fixing screws 264.

The module 260, as configured above, also has, at the opposite ends, front and rear, seats 265A, 265P and, 266A, 266P, which house the joining units 225A, 225P and levelling units 241A and 241P, respectively.

As can be clearly seen from figures 13, 18 and 19, the module 260 having the structure described above, is housed or seated, and is fixed therein, by means of screws 264, inside a complementary seat or recess 265 obtained in the thickness S of the base 222.

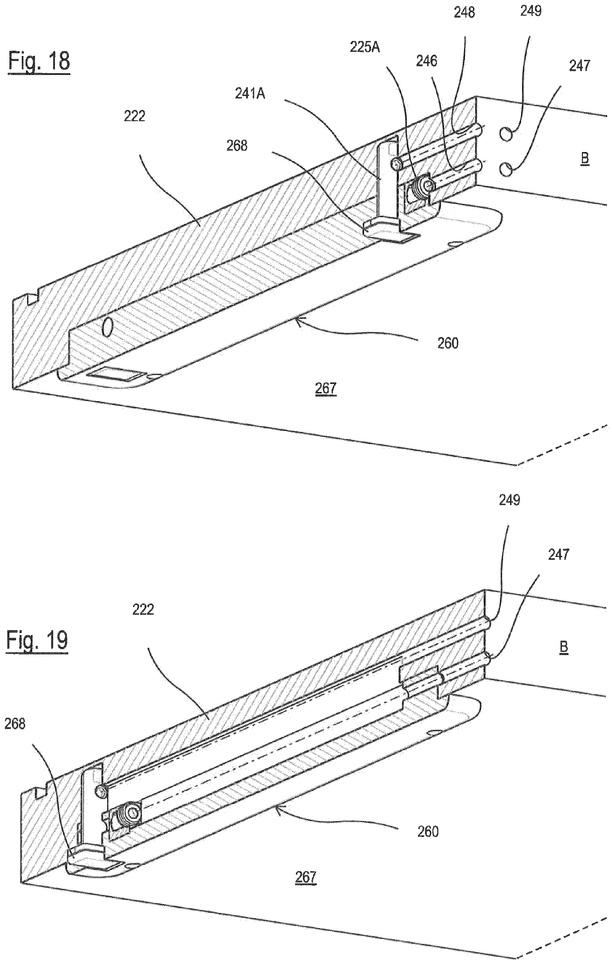

As can be clearly seen from figures 18, 19 of the drawings, the perimetric flange 262 of the module 260 is fixed on the lower surface 267 of the base 222, so that said module 260 protrudes from the base 222 for a minimum height, as also the bases 268 of the levelling units 241A, 241P.

It should be noted that the module 260 is positioned retracted with respect to the visible edge B of the base 222, whereby access, by means of the tool 240, to the indentations 239, 245, of the respective joining units 225A, 225P and levelling units 241A, 241P, front and rear respectively, is achieved by means of respective pass-through holes 246, 247 and 248, 249. The holes 246, 247 allow access to the joining units 225A, 225P, whereas the holes 248, 249 to the levelling units 241A, 241P.

According to this embodiment of the invention, the pass-through holes 246, 247 and 248, 249 do not lie on the same plane, but on parallel, overlapping planes. The holes 246, 247, for access to the joining units 225A, 225P, in fact, lie on the same lower plane, whereas the holes 248, 249, for access to the levelling units, lie on an upper plane (figures 13, 18 and 19).

The inlets of said holes 246, 247 and 248, 249 are on the visible front edge B of the base 222, whereas the outlets open in correspondence with the indentations 239, 245.

The objective mentioned in the preamble of the description has thus been achieved.

The protection scope of the present invention is defined by the enclosed claims.

## Claims

1. A furnishing item comprising at least one assembly (20) consisting of a vertical panel (21) perpendicular to a floor (P) and a horizontal panel or base (22) with a visible front edge (B), parallel to said floor (P), the furnishing item further comprising a joining and levelling system, said system comprising, applied to said vertical and horizontal panels or base (21,22), a first pair of joining units (25A,25P), front and rear respectively, for joining said vertical (21) and horizontal (22) panels and a second pair of levelling units (41A,41P), front and rear respectively, for levelling the furnishing item with respect to the floor (P), said two pairs of joining and levelling units (25A,25P,41A,41P) being operable from the front edge (B),
**characterized in that** said two pairs of joining and levelling units (25A,25P;41A,41P) are incorporated within the thickness (S) of said base (22) which substantially contains its overall height and are accessible through a plurality of longitudinal pass-through access holes (46,47;48,49) formed on said visible front edge (B) of said horizontal panel or base (22), actuation or manoeuvring tools (40) of said two pairs of units (25A,25P,41A,41P) being able to pass through said holes (46,47,48,49).

2. A furnishing item according to claim 1, **characterized in that** said two pairs of joining (25A,25P) and levelling (41A,41P) units are incorporated within a single large seat or recess (36) formed within the thickness (S) of said base (22).

3. A furnishing item according to claim 1, **characterized in that** each of said units (125A,125P,141A,141P) has its own specific seat (150,151) obtained within the thickness (S) of the base (122).

4. A furnishing item according to claim 1, **characterized in that** it consists of a joining and levelling module (260) comprising both of said at least two pairs of joining (225A,225P) and levelling (241A,241P) units, said module (260) being housed and fixed inside a complementary recess (265) formed in the thickness (S) of the base (222) in a retracted position with respect to said edge (B), whereby access by means of the tool (240) to the indentations (239,245) of the joining (225A,225P) and levelling (241A,241P) units respectively, front and rear respectively, is obtained by means of respective pass-through holes (246,247,248,249), said pass-through holes comprising first holes (246,247) allowing access to the joining units (225A,225P) and second holes (248,249) allow access to the levelling units (241A,241P).

5. A furnishing item according to claim 4, **characterized in that** said module (260) consists of a support-container (261) on which the above the joining and levelling units (225A,241A) and (225P,241P) are assembled.

6. A furnishing item according to claim 5, **characterized in that** said support-container (261) has a substantially elongated, flattened, parallelepiped configuration, similar to a "power strip".

7. A furnishing item according to claim 5 or 6, **characterized in that** said module (260) also has a perimetric flange (262) with holes (263) for the passage of fixing screws (264) to the lower surface (267) of the base (222).

8. A furnishing item according to any of the claims from 4 to 7, **characterized in that** said module (260) at the opposite front and rear ends has seats (265A,265P;266A,265P) which respectively house the joining units (225A,226P) and the levelling units (241A,241P).

9. A furnishing item according to claim 7, **characterized in that** said module (260) is fixed, by means of the perimetric flange (262), on the lower surface (267) of the base (222) so that said module (260) protrudes from said base (222) for a minimum height, and also the bases (268) of the levelling units (241A,241P) are protruding.

10. A furnishing item according to any of the claims from 4 to 9, **characterized in that** said module (260) is positioned retracted with respect to the visible edge (B) of the base (222), so that access by means of the tool (240) to the indentations (239,245) of the joining (225A,225P) and levelling (241A,241P) units respectively, front and rear respectively, is obtained through respective pass-through holes (246,247,248,249), said pass-through holes comprising first holes (246,247) allowing access to the joining units (225A,225P) and second the holes (248,249) allow access to the levelling units (241A,241P).

11. A furnishing item according to claim 10, **characterized in that** said pass-through holes (246,247,248,249) lie, superimposed, on planes parallel to each other.

12. A furnishing item according to claim 11, **characterized in that** said first holes (246,247) lie on the same lower plane, whereas said second holes (248,249) lie on the same upper plane, being said planes parallel to each other.

13. The system according to any of the claims from 10 to 12, **characterized in that** said holes (246,247,248, 249) are on the visible front edge (B) of the base (222), whereas the outlets of said holes (246,247) open in correspondence with the indentations (239,245).

14. The system according to claim 1, **characterized in that** said longitudinal pass-through holes (46,47,48,49) are parallel to each other and to the lower edge (B2) of the vertical panel (21).

## Patentansprüche

1. Einrichtungsgegenstand, umfassend zumindest eine Baugruppe (20), die aus einer vertikalen Tafel (21) senkrecht zu einem Boden (P) und einer horizontalen Tafel oder Basis (22) mit einem sichtbaren vorderen Rand (B) parallel zu dem Boden (P) besteht, wobei der Einrichtungsgegenstand ferner ein Verbindungs- und Nivellierungssystem umfasst, wobei das System, das an den vertikalen und horizontalen Tafeln oder der Basis (21, 22) angebracht ist, ein erstes Paar von Verbindungseinheiten (25A, 25P), jeweils vorne und hinten, zum Verbinden der vertikalen (21) und horizontalen (22) Tafeln und ein zweites Paar von Nivellierungseinheiten (41A, 41P), jeweils vorne und hinten, zum Nivellieren des Einrichtungsgegenstandes in Bezug auf den Boden (P) umfasst, wobei die zwei Paare von Verbindungs- und Nivellierungseinheiten (25A, 25P, 41A, 41P) von dem vorderen Rand (B) aus betätigbar sind,
**dadurch gekennzeichnet, dass** die beiden Paare von Verbindungs- und Nivellierungseinheiten (25A, 25P; 41A, 41P) in die Dicke (S) der Basis (22), die im Wesentlichen seine Gesamthöhe enthält, integriert sind und durch eine Vielzahl von länglichen Durchgangszugangslöchern (46, 47; 48, 49), die an dem sichtbaren vorderen Rand (B) der horizontalen Tafel oder Basis (22) ausgebildet sind, zugänglich sind, wobei Betätigungs- oder Manövrierwerkzeuge (40) der beiden Paare von Einheiten (25A, 25P, 41A, 41P) durch die Löcher (46, 47, 48, 49) hindurchgehen können.

2. Einrichtungsgegenstand nach Anspruch 1, **dadurch gekennzeichnet, dass** die beiden Paare von Verbindungs- (25A, 25P) und Nivellierungseinheiten (41A, 41P) in einem einzigen großen Sitz oder einer Ausnehmung (36) untergebracht sind, der/die in der Dicke (S) der Basis (22) ausgebildet ist.

3. Einrichtungsgegenstand nach Anspruch 1, **dadurch gekennzeichnet, dass** jede der Einheiten (125A, 125P, 141A, 141P) ihren eigenen spezifischen Sitz (150, 151) hat, der innerhalb der Dicke (S) der Basis (122) erhalten wird.

4. Einrichtungsgegenstand nach Anspruch 1, **dadurch gekennzeichnet, dass** er aus einem Verbindungs- und Nivellierungsmodul (260) besteht, das beide der zumindest zwei Paare von Verbindungs- (225A, 225P) und Nivellierungseinheiten (241A, 241P) umfasst, wobei das Modul (260) in einer komplementären Ausnehmung (265), die in der Dicke (S) der Basis (222) ausgebildet ist, in einer in Bezug auf den Rand (B) zurückgezogenen Position untergebracht und befestigt ist, wobei der Zugang mittels des Werkzeugs (240) zu den Vertiefungen (239, 245) der Verbindungs- (225A, 225P) bzw. Nivelliereinheiten (241A, 241P), jeweils vorne und hinten, mittels entsprechender Durchgangslöcher (246, 247, 248, 249) erhalten wird, wobei die Durchgangslöcher erste Löcher (246, 247) umfassen, die den Zugang zu den Verbindungseinheiten (225A, 225P) ermöglichen, und zweite Löcher (248, 249) den Zugang zu den Nivelliereinheiten (241A, 241P) ermöglichen.

5. Einrichtungsgegenstand nach Anspruch 4, **dadurch gekennzeichnet, dass** das Modul (260) aus einem Trägerbehälter (261) besteht, auf dem die oben genannten Verbindungs- und Nivellierungseinheiten (225A, 241A) und (225P, 241P) montiert sind.

6. Einrichtungsgegenstand nach Anspruch 5, **dadurch gekennzeichnet, dass** der Trägerbehälter (261) eine im Wesentlichen längliche, abgeflachte, parallelepipedische Form ähnlich einer "Steckdosenleiste" aufweist.

7. Einrichtungsgegenstand nach Anspruch 5 oder 6, **dadurch gekennzeichnet, dass** das Modul (260) auch einen umlaufenden Flansch (262) mit Löchern (263) für den Durchgang von Befestigungsschrauben (264) an der Unterseite (267) der Basis (222) aufweist.

8. Einrichtungsgegenstand nach einem der Ansprüche 4 bis 7, **dadurch gekennzeichnet, dass** das Modul (260) an den gegenüberliegenden vorderen und hinteren Enden Sitze (265A, 265P; 266A, 265P) aufweist, die jeweils die Verbindungs- (225A, 226P) und Nivelliereinheiten (241A, 241P) aufnehmen.

9. Einrichtungsgegenstand nach Anspruch 7, **dadurch gekennzeichnet, dass** das Modul (260) mittels des umlaufenden Flansches (262) an der Unterseite (267) der Basis (222) befestigt ist, so dass das Modul (260) über eine Mindesthöhe aus der Basis (222) herausragt und auch die Basen (268) der Nivelliereinheiten (241A, 241P) herausragen.

10. Einrichtungsgegenstand nach einem der Ansprüche 4 bis 9, **dadurch gekennzeichnet, dass** das Modul (260) in Bezug auf den sichtbaren Rand (B) der Basis (222) zurückgezogen positioniert ist, so dass ein Zugang mittels des Werkzeugs (240) zu den Vertiefungen (239, 245) der Verbindungs-(225A, 225P) bzw. Nivellierungseinheiten (241A, 241P), jeweils vorne und hinten, durch entsprechende Durchgangslöcher (246, 247, 248, 249) erhalten wird, wobei die Durchgangslöcher erste Löcher (246, 247), die den Zugang zu den Verbindungseinheiten (225A, 225P) ermöglichen, und zweite Löcher (248, 249) umfasst, die den Zugang zu den Nivellierungseinheiten (241A, 241P) ermöglichen.

11. Einrichtungsgegenstand nach Anspruch 10, **dadurch gekennzeichnet, dass** die Durchgangslöcher (246, 247, 248, 249) übereinanderliegend auf zueinander parallelen Ebenen liegen.

12. Einrichtungsgegenstand nach Anspruch 11, **dadurch gekennzeichnet, dass** die ersten Löcher (246, 247) in der gleichen unteren Ebene liegen, während die Löcher (248, 249) in der gleichen oberen Ebene liegen, wobei die Ebenen parallel zueinander sind.

13. System nach einem der Ansprüche 10 bis 12, **dadurch gekennzeichnet, dass** sich die Löcher (246, 247, 248, 249) an dem sichtbaren vorderen Rand (B) der Basis (222) befinden, während die Ausgänge der Löcher (246, 247) in Übereinstimmung mit den Vertiefungen (239, 245) münden.

14. System nach Anspruch 1, **dadurch gekennzeichnet, dass** die Längsdurchgangslöcher (46, 47, 48, 49) parallel zueinander und zu dem unteren Rand (B2) der vertikalen Tafel (21) verlaufen.

## Revendications

1. Article d'ameublement comprenant au moins un ensemble (20) constitué d'un panneau vertical (21) perpendiculaire à un sol (P) et d'un panneau horizontal ou socle (22) à bord avant apparent (B), parallèle audit sol (P), l'article d'ameublement comprenant en outre un système de jonction et de mise à niveau, ledit système comprenant, appliqué sur lesdits panneaux vertical et horizontal ou socle (21, 22), une première paire d'unités de jonction (25A, 25P), respectivement avant et arrière, pour la jonction desdits panneaux vertical (21) et horizontal (22) et une seconde paire d'unités de mise à niveau (41A, 41P), respectivement avant et arrière, pour mettre à niveau l'article d'ameublement par rapport au sol (P), lesdites deux paires d'unités de jonction et de mise à niveau (25A, 25P, 41A, 41P) pouvant être actionnées depuis le bord avant (B),
**caractérisé en ce que** lesdites deux paires d'unités de jonction et de mise à niveau (25A, 25P ; 41A, 41P) sont incorporées dans l'épaisseur (S) dudit socle (22) qui contient sensiblement sa hauteur globale et sont accessibles par une pluralité de trous d'accès traversants longitudinaux (46, 47 ; 48, 49) formés sur ledit bord avant visible (B) dudit panneau horizontal ou socle (22), les outils d'actionnement ou de manoeuvre (40) desdites deux paires d'unités (25A, 25P, 41A, 41P) pouvant passer par lesdits trous (46, 47, 48, 49).

2. Article d'ameublement selon la revendication 1, **caractérisé en ce que** lesdites deux paires d'unités de jonction (25A, 25P) et de mise à niveau (41A, 41P) sont incorporées dans un seul grand siège ou évidement (36) formé dans l'épaisseur (S) dudit socle (22).

3. Article d'ameublement selon la revendication 1, **caractérisé en ce que** chacune desdites unités (125A, 125P, 141A, 141P) possède son propre siège spécifique (150, 151) obtenu dans l'épaisseur (S) du socle (122).

4. Article d'ameublement selon la revendication 1, **caractérisé en ce qu'**il consiste en un module de jonction et de mise à niveau (260) comprenant à la fois lesdites au moins deux paires d'unités de jonction (225A, 225P) et de mise à niveau (241A, 241P), ledit module (260) étant logé et fixé à l'intérieur d'un évidement complémentaire (265) formé dans l'épaisseur (S) du socle (222) en position rétractée par rapport audit bord (B), grâce à quoi l'accès au moyen de l'outil (240) aux indentations (239, 245) respectivement des unités de jonction (225A, 225P) et de mise à niveau (241A, 241P), respectivement avant et arrière, est obtenu au moyen de trous traversants respectifs (246, 247, 248, 249), lesdits trous traversants comprenant des premiers trous (246, 247) permettant l'accès aux unités de j onction (225A, 225P) et des seconds trous (248, 249) permettant l'accès aux unités de mise à niveau (241A, 241P).

5. Article d'ameublement selon la revendication 4, **caractérisé en ce que** ledit module (260) est constitué d'un support-contenant (261) sur lequel sont assemblées les unités de jonction et de mise à niveau (225A, 241A) et (225P, 241P) ci-dessus.

6. Article d'ameublement selon la revendication 5, **caractérisé en ce que** ledit support-contenant (261) présente une configuration sensiblement allongée, aplatie, parallélépipédique, analogue à une « bloc multiprise ».

7. Article d'ameublement selon la revendication 5 ou 6, **caractérisé en ce que** ledit module (260) présente également une bride périmétrique (262) dotée de trous (263) pour le passage de vis de fixation (264) jusqu'à la surface inférieure (267) du socle (222).

8. Article d'ameublement selon l'une quelconque des revendications 4 à 7, **caractérisé en ce que** ledit module (260) au niveau des extrémités opposées avant et arrière possède des sièges (265A, 265P ; 266A, 265P) qui logent respectivement les unités de jonction (225A, 226P) et les unités de mise à niveau (241A, 241P).

9. Article d'ameublement selon la revendication 7, **caractérisé en ce que** ledit module (260) est fixé, au moyen de la bride périmétrique (262), sur la surface inférieure (267) du socle (222) de sorte que ledit module (260) dépasse dudit socle (222) sur une hauteur minimale, et également les embases (268) des unités de mise à niveau (241A, 241P) font saillie.

10. Article d'ameublement selon l'une quelconque des revendications 4 à 9, **caractérisé en ce que** ledit module (260) est positionné rétracté par rapport au bord visible (B) du socle (222), de sorte que l'accès au moyen de l'outil (240) aux indentations (239, 245) respectivement des unités de jonction (225A, 225P) et de mise à niveau (241A, 241P), respectivement avant et arrière, est obtenu par des trous traversants respectifs (246, 247, 248, 249), lesdits trous traversants comprenant des premiers trous (246, 247) permettant l'accès aux unités de jonction (225A, 225P) et des seconds trous (248, 249) permettant l'accès aux unités de mise à niveau (241A, 241P).

11. Article d'ameublement selon la revendication 10, **caractérisé en ce que** lesdits trous traversants (246, 247, 248, 249) se trouvent, superposés, sur des plans parallèles les uns aux autres.

12. Article d'ameublement selon la revendication 11, **caractérisé en ce que** lesdits premiers trous (246, 247) se trouvent sur le même plan inférieur, tandis que lesdits seconds trous (248, 249) se trouvent sur le même plan supérieur, lesdits plans étant parallèles l'un à l'autre.

13. Système selon l'une quelconque des revendications 10 à 12, **caractérisé en ce que** lesdits trous (246, 247, 248, 249) se trouvent sur le bord avant visible (B) du socle (222), tandis que les sorties desdits trous (246, 247) débouchent en correspondance avec les indentations (239, 245).

14. Système selon la revendication 1, **caractérisé en ce que** lesdits trous traversants longitudinaux (46, 47, 48, 49) sont parallèles les uns aux autres et au bord inférieur (B2) du panneau vertical (21).
